# EUROPEAN PATENT APPLICATION

(11) **EP 4 644 593 A1**
(43) Date of publication of application: **05.11.2025**
(21) Application number: 23912647.7
(22) Date of filing: 06.12.2023
(51) Int. Cl.: D03D 15/267, D06M 15/564, D06M 13/453, D06M 13/292, D06M 11/79

(54) **GLASS FIBER COMPOSITE MATERIAL AND THERMOPLASTIC CONTINUOUS FIBER REINFORCED WOVEN FABRIC COMPRISING SAME**

(30) Priority: 28.12.2022 KR 20220187130
(71) Applicant: LOTTE CHEMICAL CORPORATION, Seoul 05551 (KR)
(72) Inventor: JEONG, Ho Gun, Uiwiang-si Gyeonggi-do 16073 (KR); KIM, Won Seock, Uiwiang-si Gyeonggi-do 16073 (KR)
(74) Representative: Germain Maureau
(86) International application number: PCT/KR2023/019966
(87) International publication number: WO 2024/143972

(57) **Abstract**

A glass fiber composite material of the present invention comprises: about 100 parts by weight of glass fibers; about 35 to about 72 parts by weight of polypropylene resin; about 12 to about 35 parts by weight of piperazine pyrophosphate; about 1 to about 20 parts by weight of a phosphagen compound; and about 1 to about 20 parts by weight of zeolite. The glass fiber composite material is excellent in lightweight properties, flame retardancy, impact resistance, and rigidity.

## Description

### [Technical Field]

The present invention relates to a glass fiber composite material and a thermoplastic continuous fiber-reinforced woven fabric comprising the same. More particularly, the present invention relates to a glass fiber composite material having good properties in terms of lightweightness, flame retardancy, impact resistance, rigidity, and the like, a thermoplastic continuous fiber-reinforced woven fabric manufactured using the same, and a molded article comprising the same.

### [Background Art]

In order to meet increasingly stringent requirements for weight reduction and environmental friendliness in the automotive industry, there is a strong trend towards weight reduction of automotive parts and adoption of thermoplastic resins, especially polypropylene (PP), in automotive parts, instead of using environmentally harmful materials, thermosetting resins, and the like. In particular, regarding development of technology for lightweight electric vehicle parts, there is a need to change materials used for battery pack covers that support electric vehicle batteries.

However, use of thermoplastic resins as a material for battery pack covers and the like for the purpose of weight reduction causes problems, such as deterioration in flame retardancy, impact resistance, rigidity, and the like, as compared to metals or thermosetting resins.

Therefore, there is a need to develop a glass fiber composite material having good properties in terms of lightweightness, flame retardancy, impact resistance, rigidity, and the like, despite use of thermoplastic resins, and a thermoplastic continuous fiber-reinforced woven fabric manufactured using the same.

The background technique of the present invention is disclosed in Korean Patent Laid-open Publication No. 10-2020-0033783 and the like.

### [Disclosure]

### [Technical Problem]

It is one object of the present invention to provide a glass fiber composite material having good properties in terms of lightweightness, flame retardancy, impact resistance, rigidity, and the like.

It is another object of the present invention to provide a thermoplastic continuous fiber-reinforced woven fabric manufactured using the glass fiber composite material.

It is a further object of the present invention to provide a molded article comprising the glass fiber composite material.

The above and other objects of the present invention can be achieved by embodiments of the present invention described below.

### [Technical Solution]

1. One aspect of the present invention relates to a glass fiber composite material. The glass fiber composite material comprises: about 100 parts by weight of glass fibers; about 35 parts by weight to about 72 parts by weight of a polypropylene resin; about 12 parts by weight to about 35 parts by weight of piperazine pyrophosphate; about 1 part by weight to about 20 parts by weight of a phosphazene compound; and about 1 part by weight to about 20 parts by weight of zeolite.
2. In embodiment 1, the polypropylene resin may comprise at least one of a homopolypropylene resin, a block polypropylene resin, and a random polypropylene resin.
3. In embodiment 2, a weight ratio of the piperazine pyrophosphate to the phosphazene compound may range from about 1:0.1 to about 1:0.4.
4. In embodiment 2 or 3, the glass fiber composite material may be provided in the form of a tape in which the glass fibers are impregnated with the polypropylene resin, the piperazine pyrophosphate, the phosphazene compound, and zeolite.
5. In embodiments 1 to 4, the glass fiber composite material may be provided in the form of a tape having a thickness of about 0.2 mm to about 1.5 mm and a width of about 5 mm to about 25 mm.
6. In embodiments 1 to 5, the glass fiber composite material may have a density of about 1.40 g/cm³ to about 1.55 g/cm³, as measured in accordance with ISO 1183-1.
7. In embodiments 1 to 6, the glass fiber composite material may have a flame retardancy of V-1 or higher, as measured on a 2 mm thick specimen by the UL-94 vertical flammability test method.
8. In embodiments 1 to 7, the glass fiber composite material may have a peak force of about 3.5 kN to about 6.0 kN, a total displacement of about 20 mm to about 35 mm, and an energy absorption of about 30 J to about 50 J at a displacement of 15 mm, as measured on a 60 mm×60 mm×2 mm specimen under an impact energy of 198 J using a falling weight of 20 kg at a velocity of 4.4 m/s in accordance with ISO 6603-2.
9. In embodiments 1 to 8, the glass fiber composite material may have a tensile strength of about 180 MPa to about 270 MPa, as measured on a 3 mm thick specimen in accordance with ISO 527.
10. In embodiments 1 to 9, the glass fiber composite material may have a flexural strength of about 190 MPa to about 280 MPa, as measured on a 3 mm thick specimen in accordance with ISO 14125.
11. In embodiments 1 to 10, the glass fiber composite material may self-extinguish without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.
12. Another aspect of the present invention relates to a thermoplastic continuous fiber-reinforced woven fabric. The thermoplastic continuous fiber-reinforced woven fabric is manufactured using the glass fiber composite material according to any one of embodiments 1 to 11 as warp and weft yarns.
13. In embodiment 12, the thermoplastic continuous fiber-reinforced woven fabric may have a void having a size of about 5 mm×about 5 mm or less between each pair of adjacent warp yarns and between each pair of adjacent weft yarns.
14. A further aspect of the present invention relates to a molded article. The molded article comprises the thermoplastic continuous fiber-reinforced woven fabric.
15. In embodiment 14, the molded article may be a battery pack cover.

### [Advantageous Effects]

The present invention provides a glass fiber composite material having good properties in terms of lightweightness, flame retardancy, impact resistance, rigidity, and the like, a thermoplastic continuous fiber-reinforced woven fabric manufactured using the same, and a molded article comprising the same.

### [Description of Drawings]

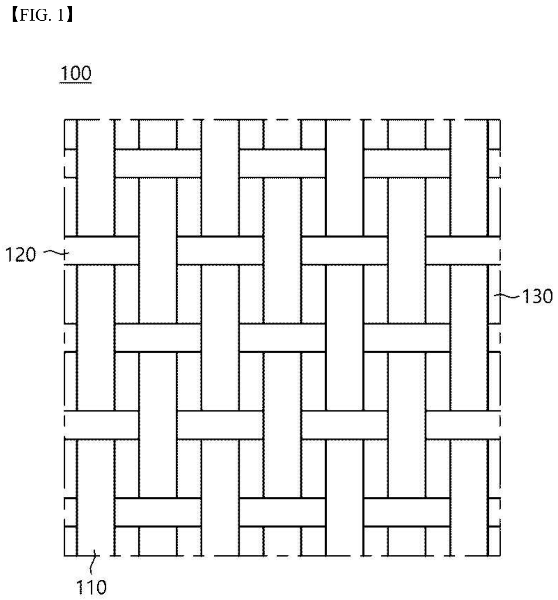

FIG. 1 is a plan view of a thermoplastic continuous fiber-reinforced woven fabric according to one embodiment of the present invention.

### [Best Mode]

Hereinafter, embodiments of the present invention will be described in detail with reference to the accompanying drawings. However, it should be understood that the following specific embodiments are provided to ensure thorough understanding of the present invention by a person having ordinary knowledge in the art and can be modified into various other forms, and that the scope of the present invention is not limited to the embodiments described below.

In the drawings, the size of components, such as width or thickness, may be exaggerated for clarity. In addition, although only a portion of a certain component is shown in the drawings for convenience of explanation, those skilled in the art will be able to easily understand the remaining portions of the component. In addition, it will be apparent to a person having ordinary knowledge in the art that the technical features of the present invention can be realized in various other forms without departing from the spirit of the invention. Herein, description of the drawings is based on the observer's viewpoint, and the terms "top," "bottom," "left," "right," "front," and "rear" are defined with respect to the orientation of the drawings. In addition, it will be apparent to a person having ordinary knowledge in the art that the technical features of the present invention can be realized in various other forms without departing from the spirit of the invention. Like components will be denoted by like reference numerals throughout the specification.

As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or combinations thereof, but do not preclude the presence or addition of one or more other features, integers, steps, operations, elements, components, and/or combinations thereof.

A glass fiber composite material according to the present invention comprises: (A) glass fibers; (B) a polypropylene resin; (C) piperazine pyrophosphate; (D) a phosphazene compound; and (E) zeolite.

As used herein to represent a specific numerical range, "a to b" is defined as "≥a and ≤b".

### (A) Glass fibers

The glass fibers according to one embodiment of the invention may form a tape-shaped glass fiber composite material having good properties in terms of lightweightness, flame retardancy, impact resistance, rigidity, and the like when impregnated with the polypropylene resin, the piperazine pyrophosphate, the phosphazene compound, and zeolite.

In some embodiments, the glass fibers may be provided in fiber form and may have various cross-sectional shapes, such as a circular shape, an oval shape, a rectangular shape, and the like. For example, fibrous glass fibers having a circular and/or rectangular cross-section as the glass fibers may be advantageous in terms of mechanical properties.

In some embodiments, when the glass fibers have a circular cross-section, the glass fibers may have a diameter of about 5 µm to about 20 µm, for example, about 7 µm to about 15 µm, as measured using a scanning electron microscope (manufacturer: JEOL Ltd., device name: JSM-6390A). When the glass fibers have a rectangular cross-section, the glass fibers may have an aspect ratio (major cross-sectional axis/minor cross-sectional axis) of about 1.5 to about 10, for example, about 2 to about 8, and a minor cross-sectional axis of about 2 µm to about 10 µm, for example, about 4 µm to about 8 µm, as measured using a scanning electron microscope (manufacturer: JEOL Ltd., device name: JSM-6390A). The glass fibers may have a pre-processing length of about 1 mm to about 30 mm, for example, about 2 mm to about 16 mm. Within these ranges, the glass fiber composite material can have good properties in terms of productivity, impregnation performance, and the like.

In some embodiments, the glass fibers may be treated with a typical surface treatment agent. The surface treatment agent may include silane compounds, urethane compounds, epoxy compounds, and the like, without being limited thereto.

### (B) Polypropylene resin

The polypropylene resin according to one embodiment of the invention may form a tape-shaped glass fiber composite material having good properties in terms of lightweightness, flame retardancy, impact resistance, rigidity, and the like, when impregnated into the glass fibers together with piperazine pyrophosphate, the phosphazene compound, and zeolite, and may include a polypropylene resin used in typical thermoplastic resin compositions.

In some embodiments, the polypropylene resin may comprise at least one of a homopolypropylene resin, a block polypropylene resin, and a random polypropylene resin. Here, the block polypropylene resin may include a block polypropylene resin comprising a homopolypropylene block and an ethylene-propylene copolymer block and/or a homopolyethylene block, and the random polypropylene resin may include a propylene-ethylene random copolymer.

In some embodiments, the polypropylene resin may have a melt-flow index (MI) of about 1 g/10 min to about 1,600 g/10 min, for example, about 5 g/10 min to about 1,400 g/10 min, as measured at a temperature of 230°C under a load of 2.16 kg in accordance with ASTM D1238. Within this range, the glass fiber composite material can be excellent in terms of mechanical properties, molding processability, and the like.

In some embodiments, the polypropylene resin may be present in an amount of about 35 parts by weight to about 72 parts by weight, for example, about 36 parts by weight to about 70 parts by weight, relative to about 100 parts by weight of the glass fibers. If the content of the polypropylene resin is less than about 35 parts by weight relative to about 100 parts by weight of the glass fibers, breakage of the glass fibers can occur, making it impossible to manufacture the glass fiber composite material or the glass fiber composite material can suffer from deterioration in lightweightness, impregnation performance, moldability, and the like, whereas, if the content of the polypropylene resin exceeds about 72 parts by weight relative to about 100 parts by weight of the glass fibers, the glass fiber composite material can suffer from deterioration in flame retardancy, impact resistance, rigidity, and the like.

### (C) Piperazine pyrophosphate

The piperazine pyrophosphate according to one embodiment of the invention may form a tape-shaped glass fiber composite material having good properties in terms of lightweightness, flame retardancy, impact resistance, rigidity, and the like, when impregnated into the glass fibers together with the polypropylene resin, the phosphazene compound, and zeolite, and may include piperazine pyrophosphate used as a phosphorus-nitrogen flame retardant.

In some embodiments, the piperazine pyrophosphate may be present in an amount of about 12 parts by weight to about 35 parts by weight, for example, about 15 parts by weight to about 33 parts by weight, relative to about 100 parts by weight of the glass fibers. If the content of the piperazine pyrophosphate is less than about 12 parts by weight relative to about 100 parts by weight of the glass fibers, the glass fiber composite material can suffer from deterioration in flame retardancy and the like, whereas, if the content of the piperazine pyrophosphate exceeds about 35 parts by weight relative to about 100 parts by weight of the glass fibers, the glass fiber composite material can suffer from deterioration in impact resistance, rigidity, moldability, and the like.

In some embodiments, a weight ratio of the polypropylene resin to the piperazine pyrophosphate (polypropylene resin:piperazine pyrophosphate) may range from about 1:0.2 to about 1:1, for example, about 1:0.25 to about 1:0.90. Within this range, the glass fiber composite material can have further improved properties in terms of flame retardancy, impact resistance, rigidity, impregnation performance, and the like.

### (D) Phosphazene compound

The phosphazene compound according to one embodiment of the invention may form a tape-shaped glass fiber composite material having good properties in terms of lightweightness, flame retardancy, impact resistance, rigidity, and the like, when impregnated into the glass fibers together with the polypropylene resin, the piperazine pyrophosphate, and zeolite, and may include a phosphazene compound used in typical flame-retardant thermoplastic resin compositions.

In some embodiments, the phosphazene compound may comprise a phosphazene compound represented by Formula 1.

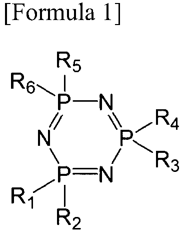

In Formula 1, R₁, R₂, R₃, R₄, R₅, and R₆ are each independently a hydrogen atom, a halogen atom, a substituted or unsubstituted C₁ to C₂₀ alkyl group, a substituted or unsubstituted C₂ to C₇ alkenyl group, a substituted or unsubstituted C₃ to C₂₀ cycloalkyl group, a substituted or unsubstituted C₂ to C₂₀ heterocycloalkyl group, a C₁ to C₂₀ alkoxy group, a C₆ to C₂₀ aryl or aryloxy group, a Cs to C₂₀ heteroaryl group, a substituted or unsubstituted C₃ to C₂₀ alkoxycarbonylalkyl group, a substituted or unsubstituted C₂ to C₁₀ carbonylalkyl group, an amino group, or a hydroxyl group.

Herein, "substituted" means that a hydrogen atom in a corresponding functional group is substituted with a substituent such as a C₁ to C₁₀ alkyl group, a halogen atom, a nitro group, a cyano group, a hydroxyl group, an amino group, a C₆ to C₁₀ aryl group, a C₃ to C₁₀ cycloalkyl group, a C₃ to C₁₀ heterocycloalkyl group, a C₄ to C₁₀ heteroaryl group, or a combination thereof.

In addition, "alkyl," "alkoxy," and other "alkyl" moiety-containing substitution products include both linear and branched forms, "alkenyl" includes both linear and branched forms having 2 to 8 carbon atoms and containing at least one double bond, and "cycloalkyl" includes both saturated monocyclic and saturated bicyclic ring structures having 3 to 20 carbon atoms. In addition, "aryl" refers to a cyclic organic radical derived from an aromatic hydrocarbon by removal of one hydrogen atom and includes single or fused ring systems in which each ring suitably contains 4 to 7, preferably 5 or 6, skeletal atoms. Specific examples of "aryl" may include phenyl, naphthyl, biphenyl, tolyl, and the like.

In addition, "heterocycloalkyl" refers to a cycloalkyl group containing 1 to 3 heteroatoms selected from among N, O, and S as a skeletal atom of a saturated cyclic hydrocarbon structure and containing carbon as other skeletal atoms of a saturated monocyclic or bicyclic ring structure, and may include, for example, pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxiranyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl, and the like.

In addition, "heteroaryl" refers to an aryl group containing 1 to 3 heteroatoms selected from among N, O, and S as a skeletal atom of an aromatic ring structure and containing carbon as other skeletal atoms of the aromatic ring structure. The heteroaryl group includes divalent aryl groups in which a heteroatom in a ring structure is oxidized or quaternized to form, for example, an N-oxide or a quaternary salt. Specific examples of "heteroaryl" may include furyl, thienyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, and the like.

In some embodiments, the phosphazene compound may be present in an amount of about 1 part by weight to about 20 parts by weight, for example, about 2 parts by weight to about 15 parts by weight, relative to about 100 parts by weight of the glass fibers. If the content of the phosphazene compound is less than about 1 part by weight relative to about 100 parts by weight of the glass fibers, the glass fiber composite material can suffer from deterioration in flame retardancy and the like, whereas, if the content of the phosphazene compound exceeds about 20 parts by weight relative to about 100 parts by weight of the glass fibers, the glass fiber composite material can suffer from deterioration in productivity, impact resistance, rigidity, and the like.

In some embodiments, a weight ratio of the piperazine pyrophosphate to the phosphazene compound (piperazine pyrophosphate:phosphazene compound) may range from about 1:0.1 to about 1:0.4, for example, about 1:0.13 to about 1:0.35. Within this range, the glass fiber composite material can have further improved properties in terms of flame retardancy, productivity, impregnation performance, and the like.

### (E) Zeolite

The zeolite according to one embodiment of the invention may form a tape-shaped glass fiber composite material having good properties in terms of lightweightness, flame retardancy, impact resistance, rigidity, and the like, when impregnated into the glass fibers together with the polypropylene resin, the piperazine pyrophosphate, and the phosphazene compound, and may include zeolite used in typical thermoplastic resin compositions.

In some embodiments, the zeolite may comprise porous particles having a pore size of about 2 nm to about 8 nm, for example, about 3 nm to about 6 nm, and an average particle size of about 1 µm to about 7 µm, for example, about 3 µm to about 5 µm. Within these ranges, the glass fiber composite material can have good properties in terms of productivity, impregnation performance, and the like. Here, the average particle size of the zeolite is defined as a particle size at a cumulative value of 50% obtained from a particle size distribution measured by a laser diffraction/scattering method.

In some embodiments, the zeolite may be present in an amount of about 1 part by weight to about 20 parts by weight, for example, about 2 parts by weight to about 15 parts by weight, relative to about 100 parts by weight of the glass fibers. If the content of the zeolite is less than about 1 part by weight relative to about 100 parts by weight of the glass fibers, the glass fiber composite material can suffer from deterioration in impact resistance, rigidity, and the like, whereas, if the content of the zeolite exceeds about 20 parts by weight relative to about 100 parts by weight of the glass fibers, the glass fiber composite material can suffer from deterioration in productivity, impregnation performance, and the like.

In some embodiments, a weight ratio of the polypropylene resin to the zeolite (polypropylene resin:zeolite) may range from about 1:0.05 to about 1:0.40, for example, about 1:0.06 to about 1:0.30. Within this range, the glass fiber composite material can have further improved properties in terms of impregnation performance, impact resistance, rigidity, and the like.

The glass fiber composite material according to one embodiment of the invention may be provided in the form of a tape in which the glass fibers are impregnated with the polypropylene resin, the piperazine pyrophosphate, the phosphazene compound, and zeolite, and may have a thickness of about 0.2 mm to about 1.5 mm, for example, about 0.3 mm to about 1.1 mm, and a width of about 5 mm to about 25 mm, for example, about 7 mm to about 20 mm. Within these ranges, the glass fiber composite material can have good properties in terms of flame retardancy, impact resistance, rigidity, and the like.

In some embodiments, the glass fiber composite material may be manufactured by any suitable method known in the art. For example, the glass fiber composite material may be manufactured using a manufacturing apparatus disclosed in Korean Patent Laid-open Publication No. 10-2018-0035064.

In some embodiments, the glass fiber composite material may have a density of about 1.40 g/cm³ to about 1.55 g/cm³, for example, about 1.41 g/cm³ to about 1.54 g/cm³, as measured in accordance with ISO 1183-1.

In some embodiments, the glass fiber composite material may have a flame retardancy of V-1 or higher, as measured on a 2 mm thick specimen by the UL-94 vertical flammability test method.

In some embodiments, the glass fiber composite material may have a peak force of about 3.5 kN to about 6.0 kN, for example, about 3.6 kN to about 5.0 kN, a total displacement of about 20 mm to about 35 mm, for example, about 22 mm to about 35 mm, and an energy absorption of about 30 J to about 50 J, for example, about 30 J to about 45 J, at a displacement of 15 mm, as measured on a 60 mm×60 mm×2 mm specimen under an impact energy of 198 J using a falling weight of 20 kg at a velocity of 4.4 m/s in accordance with ISO 6603-2.

In some embodiments, the glass fiber composite material may have a tensile strength of about 180 MPa to about 270 MPa, for example, about 181 MPa to about 260 MPa, as measured on a 3 mm thick specimen in accordance with ISO 527.

In some embodiments, the glass fiber composite material may have a flexural strength of about 190 MPa to about 280 MPa, for example, 191 MPa to 270 MPa, as measured on a 3 mm thick specimen in accordance with ISO 14125.

In some embodiments, the glass fiber composite material may self-extinguish without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.

FIG. 1 is a plan view of a thermoplastic continuous fiber-reinforced woven fabric according to one embodiment of the present invention. Referring to FIG. 1, the thermoplastic continuous fiber-reinforced woven fabric 100 according to the embodiment of the invention is a woven fabric manufactured using the tape-shaped glass fiber composite material as a warp yarn 110 and a weft yarn 120. Such a woven fabric may be manufactured by any suitable method known in the art.

In some embodiments, the thermoplastic continuous fiber-reinforced woven fabric may have a void 130 with a size of about 5 mm×about 5 mm or less between each pair of adjacent warp yarns 110 and between each pair of adjacent weft yarns 120. Within this range of void size, it is possible to minimize voids (pores) during manufacturing of molded articles and to ensure that the thermoplastic continuous fiber-reinforced woven fabric has good properties in terms of moldability, flame retardancy, impact resistance, rigidity, and the like.

A molded article according to the present invention comprises the thermoplastic continuous fiber-reinforced woven fabric and may be formed from the thermoplastic continuous fiber-reinforced woven fabric. The thermoplastic continuous fiber-reinforced woven fabric may be manufactured into various molded articles by sequentially subjecting the thermoplastic continuous fiber-reinforced woven fabric to preheating to a temperature suitable for molding, (thermal) compression to minimize voids (pores), and compression molding. Such a molding method is well known to those skilled in the art to which the present invention pertains. The molded article has good properties in terms of lightweightness, flame retardancy, impact resistance, rigidity, and property balance therebetween, and the like, and is thus useful as interior/exterior materials for electronic devices, interior/exterior materials for automobiles, and structural materials for automobiles, especially as a battery pack cover for electric vehicles.

### [Mode for Invention]

Next, the present invention will be described in more detail with reference to some examples. It should be understood that these examples are provided for illustration only and are not to be construed in any way as limiting the invention

### EXAMPLE

Details of components used in Examples and Comparative Examples are as follows.

### (A) Glass fibers

Glass fibers with a circular cross-section (manufacturer: Owens Corning, product name: SE4121 HP) were used.

### (B) Polypropylene resin

A homopolypropylene resin (manufacturer: LG Chem, product name: H7914A) was used.

### (C) Phosphorus-nitrogen compound

(C1) Piperazine pyrophosphate (manufacturer: Chempia, product name: FR220N) was used.

(C2) Melamine pyrophosphate (manufacturer: Chempia, product name: MPP-D) was used.

### (D) Phosphorus compound

(D1) A phosphazene compound (manufacturer: Chempia, product name: FRPPZ) was used.

(D2) Bisphenol-A diphosphate (manufacturer: Jiangsu Yoke Technology, product name: Yoke BDP) was used.

### (E) Zeolite

Zeolite (manufacturer: Huin Chemical, product name: APS 30) was used.

### Examples 1 to 5 and Comparative Examples 1 to 6

Based on amounts listed in Tables 1 and 2, glass fibers were impregnated with a polypropylene resin, a phosphorus-nitrogen compound (piperazine pyrophosphate or melamine pyrophosphate), a phosphorus compound (phosphazene compound or bisphenol-A diphosphate), and zeolite, followed by preparing a tape-shaped glass fiber composite material (continuous fiber thermoplastic (CFT)) having a thickness of about 0.4 mm and a width of about 11 mm by a method well-known in the art, and then a thermoplastic continuous fiber-reinforced woven fabric was manufactured by weaving the manufactured glass fiber composite material as weft and warp yarns to form a void having a size of 2 mm×2 mm or less between each pair of adjacent weft yarns and between each pair of adjacent warp yarns. Subsequently, several layers of the thermoplastic continuous fiber-reinforced woven fabric were stacked to a predetermined thickness and then manufactured into a flat sheet specimen using a hot press and a cooling press, followed by cutting the flat sheet specimen to predetermined dimensions using a numerical control machine (NC machine), thereby preparing a specimen for property evaluation. The prepared specimen was evaluated as to the following properties and results are shown in Tables 1 and 2.

### Property evaluation

(1) Lightweightness: Density (unit: g/cm³) was measured in accordance with ISO 1183-1.
(2) Flame Retardancy: Flame retardancy (unit: flammability rating) of a 2 mm thick specimen was measured by the UL-94 vertical flammability test method.
(3) Impact Resistance: In accordance with ISO 6603-2, flatwise impact strength was evaluated by measuring the peak force (unit: kN), total displacement (unit: mm), and energy absorption (unit: J) at a displacement of 15 mm of a 60 mm×60 mm×2 mm specimen under an impact energy of 198 J using a falling weight of 20 kg at a velocity of 4.4 m/s.
(4) Rigidity: Tensile strength (unit: MPa) of a 3 mm thick specimen was measured in accordance with ISO 527.
(5) Rigidity: Flexural strength (unit: MPa) of a 3 mm thick specimen was measured in accordance with ISO 14125.
(6) Long-term flame retardancy: A long-term flame retardancy test was conducted by directly heating a 330 mm×330 mm×2 mm specimen with a blue flame from a torch at a distance of 7 cm for 2 minutes and 10 seconds, followed by removal of the flame. When the specimen self-extinguished without undergoing ignition after removal of the flame, a corresponding woven fabric was evaluated as "Pass" and, when the specimen ignited after removal of the flame, a corresponding woven fabric was evaluated as "Fail".

**Table 1**

| | Example | | | | |
|---|---|---|---|---|---|
| | 1 | 2 | 3 | 4 | 5 |
| (A) (parts by weight) | 100 | 100 | 100 | 100 | 100 |
| (B) (parts by weight) | 36.4 | 45.5 | 54.5 | 70 | 50 |
| (C1) (parts by weight) | 31 | 25.5 | 18.2 | 20 | 30 |
| (C2) (parts by weight) | - | - | - | - | - |
| (D1) (parts by weight) | 9.1 | 3.6 | 5.5 | 4 | 10 |
| (D2) (parts by weight) | - | - | - | - | - |
| (E) (parts by weight) | 5.5 | 7.3 | 3.6 | 6 | 10 |
| Density (g/cm³) | 1.53 | 1.50 | 1.46 | 1.43 | 1.44 |
| Flame retardancy (flammability rating) | V-0 | V-0 | V-1 | V-1 | V-1 |
| Peak force (kN) | 3.8 | 4.3 | 4.0 | 3.9 | 3.6 |
| Total displacement (mm) | 31 | 24 | 28 | 35 | 30 |
| Energy absorption @ 15 mm (J) | 32 | 40 | 36 | 33 | 30 |
| Tensile strength (MPa) | 181 | 256 | 220 | 198 | 183 |
| Flexural strength (MPa) | 260 | 269 | 202 | 192 | 210 |
| Long-term flame retardancy | Pass | Pass | Pass | Pass | Pass |

**Table 2**

| | Comparative Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 31.7 | 73.3 | 66.7 | 45.5 | 54.5 | 41.8 |
| (C1) (parts by weight) | 25 | 31.1 | 37.8 | - | - | 30.9 |
| (C2) (parts by weight) | - | - | - | 7.3 | 5.5 | - |
| (D1) (parts by weight) | 5 | 8.9 | 8.9 | - | - | 9.1 |
| (D2) (parts by weight) | - | - | - | 21.8 | 18.2 | - |
| (E) (parts by weight) | 5 | 8.9 | 8.9 | 7.3 | 3.6 | - |
| Density (g/cm³) | Impossible to manufacture | 1.41 | 1.43 | Impossible to manufacture | Impossible to manufacture | 1.52 |
| Flame retardancy (flammability rating) | | Fail | V-1 | | | V-1 |
| Peak force (kN) | | 3.3 | 2.8 | | | 3.3 |
| Total displacement (mm) | | 38 | 37 | | | 36 |
| Energy absorption @ 15 mm (J) | | 27 | 28 | | | 29 |
| Tensile strength (MPa) | | 165 | 170 | | | 171 |
| Flexural strength (MPa) | | 173 | 171 | | | 166 |
| Long-term flame retardancy | | Fail | Pass | | | Pass |

From the above results, it could be seen that the glass fiber composite material, the thermoplastic continuous fiber-reinforced woven fabric, and the molded article according to the present invention exhibited good properties in terms of lightweightness (density), flame retardancy, impact resistance (peak force, total displacement, energy absorption at a displacement of 15 mm), rigidity (tensile strength, flexural strength), property balance therebetween, and the like.

Conversely, it could be seen that the glass fiber composite material of Comparative Example 1, manufactured using an insufficient amount of the polypropylene resin, was impossible to manufacture in tape form due to breakage of the glass fibers caused by increased friction between a nozzle and the glass fibers, the glass fiber composite material of Comparative Example 2, manufactured using an excessive amount of the polypropylene resin, suffered from deterioration in flame retardancy, impact resistance, rigidity, and the like, and the glass fiber composite material of Comparative Example 3, manufactured using an excessive amount of piperazine pyrophosphate, suffered from deterioration in impact resistance, rigidity, and the like. In addition, it could be seen that the glass fiber composite materials of Comparative Examples 4 and 5, manufactured using melamine pyrophosphate (C2) and bisphenol-A diphosphate (D2) instead of the piperazine pyrophosphate and the phosphazene compound according to the present invention, respectively, were impossible to manufacture in tape form due to increased viscosity and decreased wettability. In addition, it could be seen that the glass fiber composite material of Comparative Example 6, manufactured without zeolite, suffered from deterioration in impact resistance, rigidity, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A glass fiber composite material comprising:
about 100 parts by weight of glass fibers;
about 35 parts by weight to about 72 parts by weight of a polypropylene resin;
about 12 parts by weight to about 35 parts by weight of piperazine pyrophosphate;
about 1 part by weight to about 20 parts by weight of a phosphazene compound; and
about 1 part by weight to about 20 parts by weight of zeolite.

2. The glass fiber composite material according to claim 1, wherein the polypropylene resin comprises at least one of a homopolypropylene resin, a block polypropylene resin, and a random polypropylene resin.

3. The glass fiber composite material according to claim 1 or 2, wherein a weight ratio of the piperazine pyrophosphate to the phosphazene compound ranges from about 1:0.1 to about 1:0.4.

4. The glass fiber composite material according to any one of claims 1 to 3, wherein the glass fiber composite material is provided in the form of a tape in which the glass fibers are impregnated with the polypropylene resin, the piperazine pyrophosphate, the phosphazene compound, and zeolite.

5. The glass fiber composite material according to any one of claims 1 to 4, wherein the glass fiber composite material is provided in the form of a tape having a thickness of about 0.2 mm to about 1.5 mm and a width of about 5 mm to about 25 mm.

6. The glass fiber composite material according to any one of claims 1 to 5, wherein the glass fiber composite material has a density of about 1.40 g/cm³ to about 1.55 g/cm³, as measured in accordance with ISO 1183-1.

7. The glass fiber composite material according to any one of claims 1 to 6, wherein the glass fiber composite material has a flame retardancy of V-1 or higher, as measured on a 2 mm thick specimen by the UL-94 vertical flammability test method.

8. The glass fiber composite material according to any one of claims 1 to 7, wherein the glass fiber composite material has a peak force of about 3.5 kN to about 6.0 kN, a total displacement of about 20 mm to about 35 mm, and an energy absorption of about 30 J to about 50 J at a displacement of 15 mm, as measured on a 60 mm×60 mm×2 mm specimen under an impact energy of 198 J using a falling weight of 20 kg at a velocity of 4.4 m/s in accordance with ISO 6603-2.

9. The glass fiber composite material according to any one of claims 1 to 8, wherein the glass fiber composite material has a tensile strength of about 180 MPa to about 270 MPa, as measured on a 3 mm thick specimen in accordance with ISO 527.

10. The glass fiber composite material according to any one of claims 1 to 9, wherein the glass fiber composite material has a flexural strength of about 190 MPa to about 280 MPa, as measured on a 3 mm thick specimen in accordance with ISO 14125.

11. The glass fiber composite material according to any one of claims 1 to 10, wherein the glass fiber composite material self-extinguishes without undergoing ignition in a long-term flame retardancy test conducted by directly heating a 330 mm×330 mm×2 mm specimen with a blue flame from a torch at a distance of 7 cm for 2 minutes and 10 seconds, followed by removal of the flame.

12. A thermoplastic continuous fiber-reinforced woven fabric manufactured using the glass fiber composite material according to any one of claims 1 to 11 as warp and weft yarns.

13. The thermoplastic continuous fiber-reinforced woven fabric according to claim 12, wherein the thermoplastic continuous fiber-reinforced woven fabric has a void having a size of about 5 mm×about 5 mm or less between each pair of adjacent warp yarns and between each pair of adjacent weft yarns.

14. A molded article comprising the thermoplastic continuous fiber-reinforced woven fabric according to claim 12.

15. The molded article according to claim 14, wherein the molded article is a battery pack cover.
